## Europäisches Patentamt

## European Patent Office

## Office européen des brevets

(19)

(11) Veröffentlichungsnummer: **0 173 263**
**B1**

(12)

# EUROPÄISCHE PATENTSCHRIFT

(45) Veröffentlichungstag der Patentschrift:
**24.05.89**

(51) Int. Cl.⁴: **B 23 Q 1/28**

(21) Anmeldenummer: **85110612.0**

(22) Anmeldetag: **23.08.85**

(54) Einrichtung zum Klemmen eines gegenüber einem ersten Maschinenteil verschiebbar angeordneten zweiten Maschinenteils.

(30) Priorität: **24.08.84 DE 3431213**

(43) Veröffentlichungstag der Anmeldung:
**05.03.86 Patentblatt 86/10**

(45) Bekanntmachung des Hinweises auf die Patenterteilung:
**24.05.89 Patentblatt 89/21**

(84) Benannte Vertragsstaaten:
**AT CH FR GB IT LI**

(56) Entgegenhaltungen:
**CH-A- 87 597**
**CH-A- 225 579**
**DE-A- 1 552 442**
**DE-B- 1 008 535**
**DE-B- 2 238 287**
**DE-C- 333 609**
**DE-C- 533 406**
**DE-C- 844 389**

(73) Patentinhaber: **Friedrich Deckel Aktiengesellschaft,**
**Plinganserstrasse 150, D-8000 München 70 (DE)**

(72) Erfinder: **Kagerer, Franz, Ludwig-Braille-Strasse 6,**
**D-8000 München 70 (DE)**

## Beschreibung

Die Erfindung betrifft eine Einrichtung der im Oberbegriff des Anspruches 1 genannten Art. Die Klemmeinrichtung hat die Aufgabe, das Maschinenteil in jeder Verschiebestellung festzuhalten, wobei verlangt wird, dass durch den Klemmvorgang die Lage des Maschinenteils möglichst wenig verändert wird. Insbesondere besteht häufig die Forderung, dass durch die Klemmeinrichtung keine Kräfte senkrecht zur Führungsfläche aufgebracht werden.

Einrichtungen der gattungsgemässen Art finden beispielsweise als Klemmungen für Werkzeugmaschinenschlitten oder für vorschubbewegliche Spindelhülsen von Werkzeugmaschinen Verwendung. Bei Werkzeugmaschinenschlitten führt eine senkrecht zur Führungsfläche wirkende Klemmkraft häufig zu einer unerwünschten Deformation des Schlittens im Klemmungsbereich; bei Spindelhülsen ergibt sich ebenfalls eine unerwünschte Deformation sowie eine Spindelauslenkung zur Seite. Vor allem bei Spindelhülsen moderner, hochgenauer Werkzeugmaschinen soll die Klemmeinrichtung die Spindelhülse und damit die in dieser gelagerten Werkzeugspindel in jeder axialen Stellung sicher festhalten, ohne dass durch den Klemmvorgang die axiale, radiale sowie die Einstellung der Spindelhülse in Umfangsrichtung verändert wird.

Es ist bereits eine Klemmeinrichtung der gattungsgemässen Art für die Spindelhülse einer Werkzeugmaschine bekannt, bei der das Klemmorgan etwa tangential zur Spindelhülse angeordnet ist und mit zwei gegeneinander bewegbaren Klemmstücken einen an der Spindelhülse ausgebildeten Klemmsteg einklemmt (DE-C 2 644 178). Aus Gründen einer einfachen Herstellung sind die Klemmstücke zylindrisch ausgebildet und in einer entsprechenden Rundbohrung in der Wand des Spindelgehäuses verschiebbar gelagert. Schon ein geringes seitliches Spiel des Klemmorgans in der Rundbohrung wirkt sich so aus, dass sich die Spindelhülse um einen gewissen Betrag verdrehen kann. Ein weiterer Nachteil wird darin gesehen, dass bei einer Abnutzung oder Deformierung der Klemmflächen des Klemmsteges oder der Klemmstücke Kräfte senkrecht zur Führungsfläche, d.h. senkrecht zur Spindelachse auftreten. Da das Klemmorgan in dieser Richtung nicht ausweichen kann, wird die Spindelhülse in radialer Richtung belastet, was für die Genauigkeit der Spindel besonders nachteilig ist. Ausserdem ist bei dieser Ausbildung die mögliche kreisabschnittförmige Klemmfläche der Klemmstücke nur relativ klein, so dass bei vorgegebener zulässiger Flächenpressung nur relativ geringe Klemmkräfte erzeugt werden können.

Es ist die Aufgabe der vorliegenden Erfindung, eine Einrichtung der gattungsgemässen Art zu schaffen, welche eine weitgehend reaktionsfreie Klemmung der Spindelhülse ermöglicht und bei einfacher Bauweise eine hohe Klemmkraft aufbringt.

Diese Aufgabe ist erfindungsgemäss durch die im Kennzeichen des Anspruches 1 enthaltenen Merkmale gelöst.

Das Klemmorgan ist im wesentlichen senkrecht zur Führungsfläche der zu klemmenden Spindelhülse frei beweglich gelagert. Dadurch wirkt die Klemmung in jedem Falle in Richtung senkrecht zur Führungsfläche reaktionsfrei, so dass eine Verformung oder ein Versatz in dieser Richtung nicht auftreten kann. Ausserdem lässt sich durch die erfindungsgemässe Anordnung gegenüber der bekannten Anordnung bei etwa gleichen Abmessungen der Klemmstücke die verfügbare Klemmfläche erheblich erhöhen, so dass bei vorgegebener maximal zulässiger Flächenpressung eine höhere Klemmkraft möglich ist. Die Genauigkeit der Klemmung ist direkt von der Genauigkeit der Lagerung des Klemmorgans abhängig, ohne dass eine Vergröberung der Ungenauigkeit infolge einer Übersetzungswirkung der Anordnung erfolgt.

Gemäss der Erfindung ist vorgesehen, dass das Klemmorgan ein erstes, gegen die Führungsfläche der Spindelhülse anlegbares Klemmteil und ein sich gegen das erste Klemmteil abstützendes zweites Klemmteil umfasst, welches hinter an der Spindelhülse ausgebildete Hinterschneidungsflächen greift. Zum Klemmen wird das erste Klemmteil gegen die Führungsfläche gepresst; da es sich gegen das andere Klemmteil abstützt, wird dieses gleichzeitig gegen die Hinterschneidungsflächen gepresst, so dass das Klemmorgan sich mit der zu klemmenden Spindelhülse fest verbindet. Da der Bereich der Führungsfläche, gegen den das erste Klemmteil anliegt, als Klemmfläche mit herangezogen wird, ergibt sich gegenüber der bekannten Lösung eine wesentliche Vergrösserung der insgesamt zur Verfügung stehenden Klemmfläche.

In einem bevorzugten Ausführungsbeispiel der Erfindung ist ein Klemmteil als in einer senkrecht zur Führungsfläche der Spindelhülse ausgerichteten Bohrung des Spindelgehäuses verschiebbar gelagerte Büchse, das andere Klemmteil als in einer die Büchse koaxial durchsetzenden, mit einem Gewinde versehenen Bohrung angeordneter Schraubbolzen ausgebildet. Die als Drehteile herstellbaren Klemmteile sind einfach und preiswert.

In weiterer Ausgestaltung der Erfindung ist vorgesehen, dass an der Spindelhülse ein in Verschieberichtung verlaufender Klemmsteg mit einem schwalbenschwanzförmig nach aussen sich verbreiternden Querschnitt ausgebildet ist, dass die Büchse an ihrem dem Klemmsteg zugewandten Ende ein den Klemmsteg formschlüssig umgreifendes Profil aufweist und dass zwischen dem Schraubbolzen und dem Klemmsteg ein in der Bohrung längs verschiebbar und unverdrehbar gelagertes, gegen die Stirnfläche des Klemmsteges sich anlegendes Klemmstück vorgesehen ist. Bei einer Klemmeinrichtung zur Klemmung einer Spindelhülse, bei der die Stirnfläche des Klemmsteges zylindrisch gebogen ist, ist es günstig, dass das Klemmstück eine zu dieser Stirnfläche komplementäre Auflagefläche aufweist, so dass es zur Erhöhung der wirksamen Klemmfläche auf dieser flächig aufliegt.

Der Schraubbolzen ist an seinem dem Klemmsteg abgewandten Ende mit einem Betätigungsgriff versehen.

Ein Ausführungsbeispiel der Erfindung ist in der Zeichnung dargestellt und im folgenden näher beschrieben. Es zeigen:

Fig. 1 einen Längsschnitt durch eine in einem Spindelgehäuse angeordnete vorschubbewegliche Spindelhülse mit einer Klemmeinrichtung;

Fig. 2 einen Querschnitt durch eine Einrichtung gemäss Fig. 1 entlang der Linie II–II.

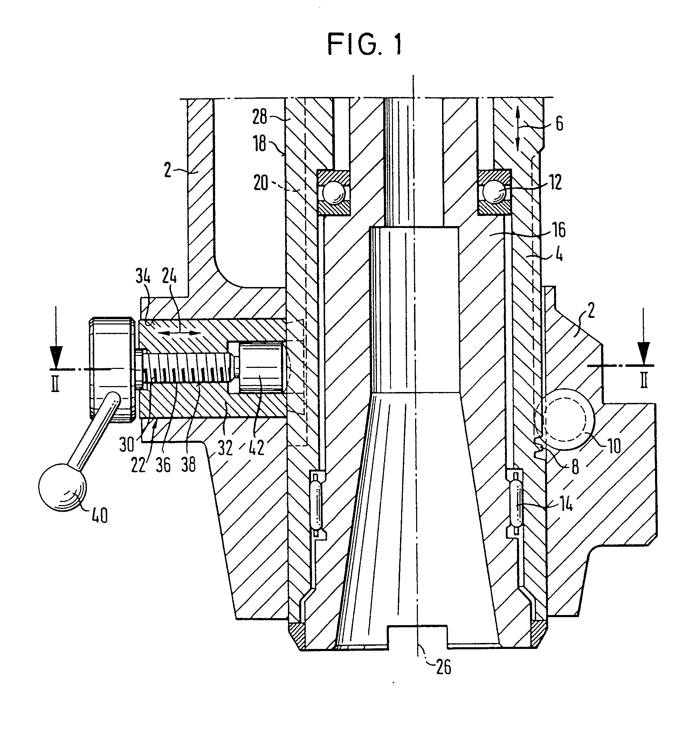

Das in Fig. 1 gezeigte erste Maschinenteil 2 ist ein Spindelgehäuse 2, in welchem eine Spindelhülse 4 in Richtung des Pfeiles 6 vorschubbeweglich gelagert ist. Für den Vorschubantrieb ist die Spindelhülse 4 an ihrer Aussenseite mit einer Verzahnung 8 versehen, in die ein mit einem Vorschubantrieb, einer Handkurbel oder dergleichen verbundenes Ritzel 10 eingreift. In der Spindelhülse 4 ist in an sich bekannter Weise über Lager 12, 14 eine Werkzeugmaschinenspindel 16 drehbar gelagert. Diese ist in bekannter, hier nicht näher beschriebener Weise mit einem Spindelantrieb versehen.

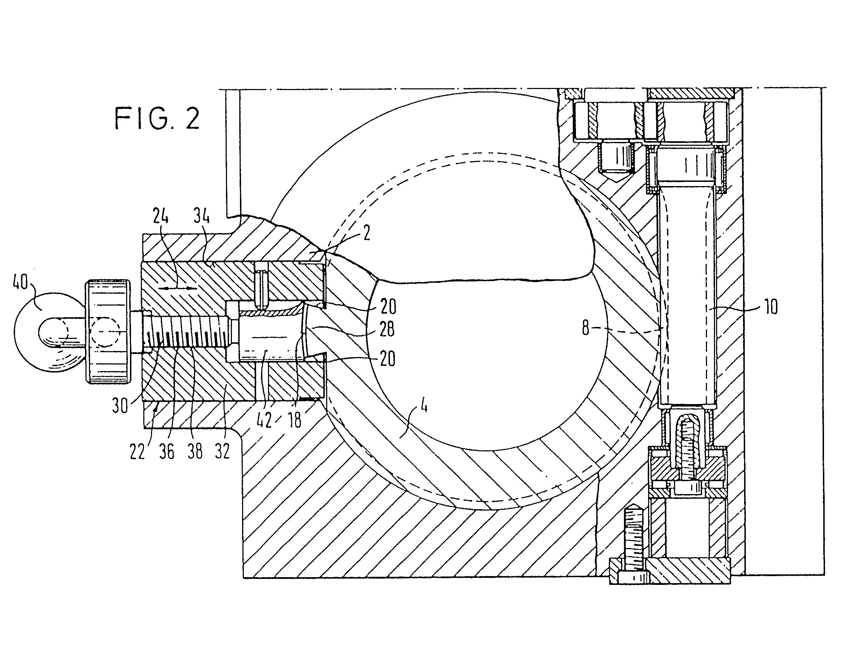

Als Führungsfläche 18 zur Führung der Spindelhülse 4 im Spindelgehäuse 2 dient die Mantelfläche der Spindelhülse. In dem in Fig. 1 nach links zeigenden Bereich dieser Führungsfläche 18 sind in Verschieberichtung verlaufende Klemmflächen 20 ausgebildet, wie anhand der Fig. 2 noch genauer beschrieben wird. An diesen Klemmflächen ist ein als Ganzes mit 22 bezeichnetes Klemmorgan anklemmbar, welches seinerseits in Richtung des Pfeiles 24 frei beweglich, im übrigen aber spielfrei im Spindelgehäuse 2 gelagert ist.

Zum Klemmen der Spindelhülse 4 im Spindelgehäuse 2 wird das Klemmorgan 22 fest an den Klemmflächen 20 angeklemmt. Wegen der freien Beweglichkeit des Klemmorgans 22 in Richtung des Pfeiles 24 tritt beim Klemmvorgang keinerlei Kraft quer zur Spindelachse 26 auf, während die Spindelhülse 4 in axialer Richtung sowie in Umfangsrichtung spielfrei festgehalten wird.

Fig. 2 zeigt die Anordnung gemäss Fig. 1 in einem Querschnitt, wobei gleiche Teile mit gleichen Bezugszeichen bezeichnet sind. Zur Bildung der Klemmflächen 20 ist in der als Führungsfläche 18 dienenden Mantelfläche der Spindelhülse 4 ein in Verschieberichtung verlaufender Klemmsteg 28 mit einem schwalbenschwanzförmig nach aussen sich verbreiternden Querschnitt ausgearbeitet. Die Klemmflächen 20 bilden demnach Hinterschneidungsflächen, an denen das Klemmorgan 22 angreifen kann. Das Klemmorgan 22 besteht aus einem ersten, gegen die Führungsfläche der Spindelhülse anlegbaren Klemmteil 30 und einem sich gegen das erste Klemmteil abstützenden zweiten Klemmteil 32, welches hinter die Hinterschneidungsflächen greift. Wie Fig. 2 erkennen lässt, ist das zweite Klemmteil als in einer Bohrung 34 des Spindelgehäuses 2 verschiebbar gelagerte Büchse, das erste Klemmteil als in einer diese Büchse koaxial durchsetzenden, mit einem Gewinde 36 versehenen Bohrung 38 angeordneter Schraubbolzen ausgebildet. Die Büchse 32 ist an ihrem der Spindelhülse 4 zugewandten Ende mit einem den Klemmsteg 28 formschlüssig umgreifenden Profil versehen. Zum Klemmen wird der Schraubbolzen 30 mittels eines daran angeordneten Betätigungsgriffes 40 in die Büchse 32 eingeschraubt, wobei dieser sich gegen die Aussenseite der Spindelhülse, die Büchse 32 sich gegen die Klemmflächen 20 anlegt, so dass das Klemmorgan 22 auf dem Klemmsteg unverschiebbar festsitzt. Um eine möglichst grosse Reibfläche zwischen dem Schraubbolzen 30 und der Aussenseite der Spindelhülse 4 zu erreichen, ist zwischen dem Schraubbolzen 30 und der Spindelhülse 4 ein Klemmstück 42 mit einem zur Stirnfläche des Klemmsteges 28 komplementären Profil angeordnet.

Nach Lösen des Klemmorgans 22 vom Klemmsteg 28 kann die Spindelhülse 4 mittels des in die Verzahnung 8 eingreifenden Ritzels 10 verschoben werden, wie nicht näher erläutert zu werden braucht.

Patentansprüche

1. Einrichtung zum Klemmen einer verschiebbar in einem Spindelgehäuse (2) angeordneten Spindelhülse (4), umfassend an einer dem Spindelgehäuse zugewandten Führungsfläche (18) der Spindelhülse ausgebildete, längs Mantellinien der Spindelhülse verlaufende Klemmflächen (20) sowie ein am Spindelgehäuse in Verschieberichtung unbeweglich gehaltenes, an die Klemmflächen der Spindelhülse anklemmbares Klemmorgan (22), dadurch gekennzeichnet, dass das Klemmorgan bezüglich der Spindelhülsenachse (26) radial frei beweglich in der Wand des Spindelgehäuses (2) gelagert ist und dass das Klemmorgan ein erstes, gegen die Führungsfläche der Spindelhülse anlegbares Klemmteil (30) und ein sich gegen das erste Klemmteil abstützendes zweites Klemmteil (32) umfasst, welches hinter an der Spindelhülse ausgebildete Hinterscheidungsflächen (20) greift.

2. Einrichtung nach Anspruch 1, dadurch gekennzeichnet, dass ein Klemmteil (32) als in einer senkrecht zur Führungsfläche (18) der Spindelhülse (4) ausgerichteten Bohrung (34) des Spindelgehäuses (2) verschiebbar gelagerte Büchse, das andere Klemmteil (30) als in einer die Büchse koaxial durchsetzenden, mit einem Gewinde (36) versehenen Bohrung (38) angeordneter Schraubbolzen ausgebildet ist.

3. Einrichtung nach Anspruch 2, dadurch gekennzeichnet, dass an der Spindelhülse (4) ein in Verschieberichtung verlaufender Klemmsteg (28) mit einem schwalbenschwanzförmig nach aussen sich verbreiternden Querschnitt ausgebildet ist, dass die Büchse (32) an ihrem dem Klemmsteg (28) zugewandten Ende ein den Klemmsteg (28) formschlüssig umgreifendes Profil aufweist und dass zwischen dem Schraubbolzen (30) und dem Klemmsteg (28) ein in der Bohrung längsverschiebbar und unverdrehbar gelagertes, gegen die Stirnfläche des Klemmsteges sich anlegendes Klemmstück (42) vorgesehen ist.

4. Einrichtung nach Anspruch 3, dadurch gekennzeichnet, dass das Klemmstück (42) eine zur Stirnfläche des Klemmsteges (28) komplementäre Auflagefläche aufweist.

5. Einrichtung nach einem der Ansprüche 2 bis 4, dadurch gekennzeichnet, dass der Schraubbolzen (30) an seinem dem Klemmsteg (28) abgewandten Ende einen Betätigungsgriff (40) trägt.

## Claims

1. Device for clamping a spindle sleeve (4) which is slidably arranged in a spindle housing (2), comprising clamping surfaces (20) being arranged at the guiding surfaces (18) facing the spindle housing and along the generating lines of the spindle sleeve as well as a clamping means (22) which is fixedly mounted in the sliding direction on the spindle housing and which can be clamped on the clamping surfaces of the spindle sleeve, characterized in that the clamping means is supported freely movable and with respect to the spindle sleeve axis (26) in radial direction in the wall of the spindle housing (2), and that the clamping means comprises a first clamp element (30) adapted to be pressed against the guiding surfaces of the spindle sleeve and a second clamp element (32) propped up against the first clamp element, which grips behind the undercut surfaces (20) formed at the spindle sleeve.

2. Device according to claim 1, characterized in that one clamp element (32) is designed as a sleeve slidably arranged in a bore (34) of the spindle housing (2), the bore extending perpendicularly to the guiding surface (18) of the spindle sleeve (4), and the other clamp element (30) is designed as a screw bolt being arranged in a bore (38) having a thread (36) and penetrating the sleeve in coaxial direction.

3. Device according to claim 2, characterized in that at the spindle sleeve (4) a clamp web (28) extending in the sliding direction with a cross section widening in outward direction in dovetailed form is arranged, that the sleeve (32) has, at its end facing the clamp web (28), a profile which grips the clamp web (28) in a form-locking way, and that between the screw bolt (30) and the clamp web (28) a clamping part (42) is provided which is supported slidably in the longitudinal direction and nonpivotable in the bore and which lies against the front surface of the clamp web.

4. Device according to claim 3, characterized in that the clamp part (42) has a contact surface being complementary to the front surface of the clamp web (28).

5. Device according to one of claims 2 to 4, characterized in that the screw bolt (30) has an operating handle (40) at its end opposite to the clamp web (28).

## Revendications

1. Dispositif de serrage d'un fourreau de broche (4) disposé coulissant dans un carter de broche (2), comportant des surfaces de serrage (20) formées sur une surface de guidage (18) du fourreau de broche, tournée vers le carter de broche, et s'étendant le long de lignes génératrices du fourreau de broche, ainsi qu'un organe de serrage (22) maintenu sur le carter de broche, immobile dans la direction du déplacement, et pouvant être serré contre les surfaces de serrage du fourreau de broche, caractérisé en ce que l'organe de serrage est monté dans la paroi du carter de broche (2), de manière à pouvoir se déplacer librement radialement par rapport à l'axe (26) du fourreau de broche, et en ce que l'organe de serrage comporte un premier élément de serrage (30) s'appliquant contre la surface de guidge du fourreau de broche, et un deuxième élément de serrage (32) prenant appui contre le premier élément de serrage, et qui passe derrière des surfaces en contre-dépouille (20) formées sur le fourreau de broche.

2. Dispositif selon la revendication 1, caractérisé en ce qu'un élément de serrage (32) est une douille montée coulissante dans un perçage (34) du carter de broche (2), dirigé perpendiculairement à la surface de guidage (18) du fourreau de broche (4), l'autre élément de serrage (30) étant un boulon fileté disposé dans un perçage (38) pourvu d'un taraudage (36), traversant coaxialement la douille.

3. Dispositif selon la revendication 2, caractérisé en ce qu'une barrette de serrage (28) s'étendant dans la direction de déplacement, et de section transversale en queue d'aronde s'élargissant vers l'extérieur, est formée sur le fourreau de broche (4), en ce que la douille (32) présente à son extrémité tournée vers la barrette de serrage (28), un profil entourant de manière engrenante la barrette de serrage (28), et en ce qu'il est prévu, entre le boulon fileté (30) et la barrette de serrage (28) une pièce de serrage (42) montée coulissante longitudinalement et non-rotative dans le perçage, et s'appliquant contre la face frontale de la barrette de serrage.

4. Dispositif selon la revendication 3, caractérisé en ce que la pièce de serrage (42) présente une surface d'appui complémentaire de la face frontale de la barrette de serrage (28).

5. Dispositif selon l'une des revendications 2 à 4, caractérisé en ce que le boulon fileté (30) porte une poignée de manœuvre (40), à son extrémité éloignée de la barrette de serrage (28).

## FIG. 1

FIG. 2

EP 0 173 263 B1